# EUROPÄISCHE PATENTSCHRIFT

(11) **EP 3 290 206 B1**
(45) Veröffentlichungstag und Bekanntmachung des Hinweises auf die Patenterteilung: **15.07.2020**
(21) Anmeldenummer: 16186374.1
(22) Anmeldetag: 30.08.2016
(51) Int. Cl.: B29C 48/10, B32B 37/15

(54) **VERFAHREN ZUR HERSTELLUNG EINES KUNSTSTOFFGEWEBE-FOLIEN-VERBUNDPRODUKTES, KUNSTSTOFFGEWEBE-FOLIEN-VERBUND SOWIE VERPACKUNGSBEUTEL AUS EINEM KUNSTSTOFFGEWEBE-FOLIEN-VERBUND**
METHOD FOR PRODUCING A PLASTIC TISSUE FILM COMPOSITE PRODUCT, PLASTIC TISSUE FILM COMPOSITE AND PACKAGING BAG MADE OF A PLASTIC TISSUE FILM COMPOSITE
PROCEDE DE FABRICATION D'UN PRODUIT COMPOSITE FEUILLES/TISSU EN MATIERE PLASTIQUE, COMPOSITE FEUILLES/TISSU EN MATIERE PLASTIQUE ET SAC D'EMBALLAGE FABRIQUE A PARTIR D'UN COMPOSITE FEUILLES/TISSU EN MATIERE PLASTIQUE

(43) Veröffentlichungstag der Anmeldung: 07.03.2018
(73) Patentinhaber: Mondi AG, 1030 Wien (AT)
(72) Erfinder: KÖSTERS, Jens, 49134 Wallenhorst (DE)
(74) Vertreter: Lorenz, Bernd Ingo Thaddeus

(56) Entgegenhaltungen:
- WO-A1-03/074264
- WO-A1-2006/073342
- WO-A1-2016/008744
- WO-A1-2016/083266
- DE-B- 1 213 991

## Beschreibung

Die Erfindung betrifft ein Verfahren zur Herstellung eines Kunststoffgewebe-Folien-Verbundproduktes. Gegenstand der Erfindung sind auch ein Kunststoffgewebe-Folien-Verbund sowie ein Verpackungsbeutel.

Kunststoffgewebeverbundbeutel sind insbesondere für Großgebinde geeignet, die ein erhebliches Füllvolumen und ein erhebliches Füllgewicht aufweisen. Durch die einzelnen, einander kreuzenden Bändchen des Folienbändchengewebes können sehr große Belastungen aufgenommen werden. Selbst bei einer lokalen Beschädigung des Kunststoffgewebes bzw. des Kunststoffgewebe-Folien-Verbundes kann durch die einzelnen senkrecht zueinander verwebten Bändchen ein Weiterreißen verhindert werden.

Zur Stabilität trägt auch bei, dass die üblicherweise aus Polypropylen gebildeten Bändchen gereckt sind, wobei durch die kreuzförmige Anordnung der einzelnen Bändchen in dem Webprozess ein in alle Richtungen stabiles Material gebildet wird.

Einfache, unbeschichtete Verpackungsbeutel aus einem Kunststoffbändchengewebe können beispielsweise für die Verpackung von Bauprodukten eingesetzt werden, wobei dann ein Verschluss solcher Verpackungsbeutel in der Regel durch ein Vernähen oder Verkleben erfolgt, weil das an sich aus einem thermoplastischen Kunststoff gebildete Folienbändchengewebe nur schlecht heißgesiegelt werden kann.

Für anspruchsvolle Verpackungen ist beispielsweise aus der WO 2009/033197 A1 bekannt, das Kunststoffbändchengewebe mit einer bei zu bildenden Verpackungsbeutel außenliegenden Deckfolie zu versehen, die an ihrer dem Folienbändchengewebe zugewandten Seite bedruckt ist, wobei dann der Aufdruck durch die Deckfolie hindurch sichtbar ist. Ein solcher Verpackungsbeutel kombiniert in einem gewissen Maße die Vorteile eines einfachen Gewebebeutels aus Folienbändchengewebe einerseits mit den Vorteilen eines Folienbeutels andererseits. Durch die beschriebene Kombination kann eine sehr hohe Trag- und Reißfestigkeit erreicht werden, während die Deckfolie an der Beutelaußenseite einen dichten Verschluss sowie ein hochwertiges Erscheinungsbild sicherstellt. Auch bei einem solchen Beutel kann sich jedoch der Nachteil ergeben, dass das an der Innenseite angeordnete Folienbändchengewebe ohne weitere Maßnahmen nicht heißsiegelbar und damit der Verschluss des Verpackungsbeutels schwierig ist. Des Weiteren können Flüssigkeiten aus dem Inneren des Beutels zumindest in das Folienbändchengewebe eindringen.

Um die beschriebenen Verpackungsbeutel aus einem Kunststoffgewebe-Folien-Verbund heißsiegelbar auszugestalten, wird gemäß der EP 2 188 438 B1, der WO 95/30598 A1, sowie der DE 2 027 060 A vorgeschlagen, das Folienbändchengewebe mit einer schmelzflüssigen Beschichtung zu versehen, welche dann an der Innenseite eines Verpackungsbeutel angeordnet wird und dort die Erzeugung von Heißsiegelnähten ermöglicht. Der schmelzflüssige Kunststoff wird dazu auf das Folienbändchengewebe aufgebracht, insbesondere aufextrudiert. Dabei ergibt sich auch der Vorteil, dass der schmelzflüssige Kunststoff in Zwischenräume des Folienbändchengewebes einbringen kann, wodurch eine besonders zuverlässige und innige Verbindung des Verbundes erreicht wird.

Die Kunststoffbeschichtung wird so ausgewählt, dass die Schmelz- und Erweichungstemperatur deutlich unterhalb der entsprechenden Temperaturen des Folienbändchengewebes liegt, damit die Stabilität der gereckten Folienbändchen weder bei der Beschichtung noch bei einem späteren Versiegeln beeinträchtigt werden. Folglich ist die Materialauswahl für die heißsiegelbare Kunststoffbeschichtung stark eingeschränkt.

Um auf eine solche Beschichtung verzichten zu können, kann auch ein andersartiger Verschluss des Folienbeutels vorgesehen sein. Beispielsweise kann der aus einem Folienbändchengewebe gebildete Verpackungsbeutel umgeschlagen und mit Klebstoff oder einem Klebeband verschlossen werden. Eine entsprechende Ausgestaltung ist aus der WO 01/05671 A1 bekannt.

Neben einem Verschluss durch Heißschmelzklebstoff gemäß der US 4 373 979 kommt auch ein einfaches Vernähen in Betracht.

Schließlich kann gemäß der WO 2013/123015 A1 auch am oberen Rand sowie am unteren Rand des Verpackungsbeutels ein stufenförmiger Beschnitt vorgesehen sein, damit die umgelegten Enden leichter verschlossen werden können, wozu beispielsweise eine Verbindung durch Ultraschallschweißen und/ oder Heißluft in Betracht kommen.

Schließlich ist aus der US 2013/0040084 A1 ist ein Kunststoffgewebeverbundbeutel bekannt, der an seiner Innenseite eine Barriereschicht aufweist, welche durch Klebstoff auf das Folienbändchengewebe aufgebracht ist.

Die WO 03/074264 betrifft zudem ein Kreuzlaminat mit zwei miteinander verklebten Folien. Die Folien selbst weisen jeweils eine Schicht aus parallel zueinander angeordneten Strängen auf.

Der vorliegenden Erfindung liegt die Aufgabe zugrunde, ein Verfahren zur Herstellung eines verbesserten Kunststoffgewebe-Folien-Verbundproduktes anzugeben. Insbesondere sollen an dem Kunststoffgewebe-Folien-Verbundprodukt auch Heißsiegelnähte ausgebildet werden können, wobei auch eine Anpassung hinsichtlich der funktionellen Eigenschaften angestrebt wird. Des Weiteren sollen auch ein Kunststoffgewebe-Folien-Verbund sowie ein Verpackungsbeutel aus einem Kunststoffgewebe-Folien-Verbund angegeben werden.

Gegenstand der Erfindung und Lösung der Aufgabe sind ein Verfahren zur Herstellung eines Kunststoffgewebe-Folien-Verbundes gemäß Patentanspruch 1, ein Kunststoffgewebe-Folien-Verbund gemäß Patentanspruch 11 sowie ein daraus gebildeter Verpackungsbeutel gemäß Patentanspruch 13.

Gegenstand der Erfindung ist damit ein Verfahren zur Herstellung eines Kunststoffgewebe-Folien-Verbundproduktes, wobei durch Folienextrusion eine zumindest eine Siegelschicht aufweisende Extrusionsfolienbahn derart gebildet wird, dass sich die Siegelschicht an einer ersten Seite der Extrusionsfolienbahn befindet und wobei eine Kunststoffgewebebahn aus einem Folienbändchengewebe und die vorgefertigte Extrusionsfolienbahn zugeführt und miteinander zu einer Verbundbahn derart kaschiert werden, dass eine zweite Seite der Extrusionsfolienbahn einer ersten Seite der Kunststoffgewebebahn zugewandt ist.

Die Siegelschicht weist zweckmäßigerweise eine geringere Schmelz- und Erweichungstemperatur als das Bändchengewebe auf. Die Siegelschicht kann damit durch das Bändchengewebe hindurch versiegelt werden, ohne dass dieses aufschmilzt und vorzugsweise auch ohne dass es seine Festigkeit durch ein Erweichen verliert. Insbesondere kann die Siegelschicht bei einer Faltung auf sich selbst mit sich selbst versiegelt werden. Je nach Ausgestaltung ist es auch denkbar, dass die Siegelschicht derart ausgewählt ist, dass diese auch gegen eine andere Folienschicht, beispielsweise einer zusätzlichen Deckfolie heißsiegelbar ist. Insbesondere können auch Wiederverschlüsse an der Folienschicht bzw. an einer Innenseite des fertigen Verpackungsbeutels angesiegelt werden.

Wie an sich aus dem Stand der Technik bekannt, wird an der Kunststoffgewebebahn aus einem Folienbändchengewebe eine Siegelschicht erzeugt, welche dann bei der nachfolgenden Herstellung eines Verpackungsbeutels an der Innenseite angeordnet wird. Im Gegensatz zu dem Stand der Technik wird dazu jedoch zunächst in einem separaten Verfahrensschritt durch Folienextrusion eine Extrusionsfolie erzeugt, welche dann als vorgefertigte Extrusionsfolienbahn mit der Kunststoffgewebebahn kaschiert, insbesondere extrusionskaschiert wird.

Bewusst wird in diesem Zusammenhang für den separaten Verfahrensschritt einer Folienextrusion ein zusätzlicher Aufwand in Kauf genommen. Der Erfindung liegt in diesem Zusammenhang die Erkenntnis zugrunde, dass durch den Einsatz einer Extrusionsfolienbahn die Eigenschaften des Kunststoffgewebe-Folien-Verbundes optimiert werden können.

Da im Rahmen der Erfindung eine vorgefertigte Extrusionsfolienbahn zugeführt und kaschiert wird, kann an der von der Siegelschicht gebildeten Seite eine glatte Oberfläche erzeugt werden, weil die vorgefertigte Extrusionsfolienbahn im Gegensatz zu einer aufkaschierten Schicht nicht schmelzflüssig ist und auch nicht fließen kann. Durch die Bereitstellung einer völlig glatten, ebenen Siegelschicht als Bestandteil der Extrusionsfolienbahn kann ein nachfolgendes Heißsiegeln erleichtert werden. Insbesondere bei einem geringen Temperatureintrag kann leicht eine zuverlässige und entlang von Siegelbacken vollflächige Verbindung erreicht werden, während bei einer ungleichmäßigeren Oberflächenstruktur unzureichende Verbindungsstellen resultieren können.

Die Extrusionsfolienbahn wird vorzugsweise mittels Blasfolienextrusion extrudiert, so dass folglich eine Blasfolienbahn vorliegt.

Darüber hinaus kann die Extrusionsfolienbahn auch ohne weiteres mehrschichtig coextrudiert werden. Es ist dann auch möglich, weitere Funktionsschichten in die B Extrusionsfolienbahn zu integrieren.

Besonders bevorzugt ist ein zumindest dreischichtiger Aufbau, bei welchem die bei dem Verbund schließlich außen liegende Siegelschicht über eine Haftvermittlerschicht an eine Funktionsschicht angrenzt. Im Rahmen der Erfindung kann beispielsweise eine Barriereschicht in die Extrusionsfolienbahn integriert werden.

Durch den separat vorgelagerten Prozess der Folienextrusion kann eine geeignete Schichtfolge mit unterschiedlichsten Materialien weitgehend frei gewählt werden, wobei durch den Folienextrusionsprozess auch gute mechanische Eigenschaften erreicht werden können.

Als Material für eine Barriereschicht kommen beispielsweise Ethylen-Vinylalkohol-Copolymer (EVOH), Polyamid (PA) und Polyethylenterephthalat (PET) in Betracht.

Die Siegelschicht ist vorzugsweise auf der Basis von Polyolefin, insbesondere Polyethylen (PE) gebildet. Die Siegelschicht und die Funktionsschicht sind zweckmäßigerweise durch eine geeignete Haftvermittlerschicht miteinander verbunden. Ausgehend von der Siegelschicht kommen exemplarisch die nachfolgend aufgeführten Schichtfolgen in Betracht:
PE/HV/PA, PE/HV/EVOH, PE/HV/EVOH/HV/PE, PE/HV/PA/HVPE, PE/HV/PA/EVOH/PA/HV/PE.

Die Barriereschicht aus EVOH kann insbesondere als Gas- bzw. Geruchsbarriere vorgesehen sein und zeichnet sich durch eine besonders gute Sperrwirkung aus. Darüber hinaus stellt EVOH auch eine effektive Barriere gegen eine Migration von Ölen und Fetten dar, welche gerade bei Lebensmitteln oder Tiernahrung zu großen Teilen in dem Füllgut enthalten sein können.

Auch Polyamide sind als Gas- bzw. Geruchsbarriere oder auch als Barriere gegen Öle und Fette geeignet.

Wie bereits zuvor erläutert, werden die vorgefertigte Extrusionsfolienbahn und die Kunststoffgewebebahn vorzugsweise durch eine Extrusionskaschierung miteinander verbunden, wozu zumindest eine schmelzflüssige Folienschicht zwischen die vorgefertigte Extrusionsfolienbahn und die Kunststoffgewebebahn eingebracht wird.

Die Extrusionskaschierung erfolgt an einer zweiten Seite der Extrusionsfolie, während sich die Siegelschicht an der ersten Seite der Extrusionsfolie befindet, so dass diese nachfolgend eine Außenseite der Verbundbahn bildet. Bei der Extrusionskaschierung ergibt sich der Vorteil, dass Unebenheiten der Kunststoffgewebebahn aus dem Folienbändchengewebe in einem gewissen Maße ausgeglichen werden können, weil der im Rahmen der Extrusionskaschierung zusätzliche eingebrachte schmelzflüssige Kunststoff zwischen die Freiräume der kreuzweise angeordneten Folienbändchen eindringen kann. An der Extrusionsfolie ergibt sich dagegen eine im Wesentlichen ebene Kontaktfläche.

Bei der Extrusionskaschierung können auch zwei oder mehr Schichten schmelzflüssig zwischen die Extrusionsfolienbahn und die Kunststoffgewebebahn eingebracht werden. Beispielsweise kann bei der Extrusionskaschierung eine zweischichtige Coextrusion vorgesehen sein, wobei in Richtung des Bändchengewebes eine Schicht aus Polypropylen und in Richtung der Extrusionsfolienbahn eine Schicht eines Haftvermittlers vorgesehen sind. Als Polypropylen kommen sowohl Homopolymere als Copolymere einschließlich Random-Copolymere und Block-Copolymere in Betracht. Als Haftvermittler sind beispielsweise Polyolefin-Copolymere, Polyolefin-Terpolymere und funktionalisierte Polyolefine geeignet. Zu den funktionalisierten Polyolefinen zählt beispielsweise ein MAH-gepfropftes PP.

Erfindungsgemäß wird an einer Seite der Kunststoffgewebebahn aus dem Folienbändchengewebe eine vorgefertigte Extrusionsfolienbahn aufkaschiert. An der gegenüberliegenden Seite der Kunststoffgewebebahn kann - wie auch aus dem Stand der Technik bekannt - eine Deckfolie angeordnet werden. Im Rahmen der Erfindung ist diese Deckfolie jedoch nicht notwendig, um bei der Herstellung eines Verpackungsbeutels aus dem Kunststoffgewebe-Folien-Verbund eine Dichtigkeit zu ermöglichen. Vielmehr dient die Deckfolie als eine Art Dekorfolie, welche die Kunststoffgewebebahn an der Außenseite abdeckt. Insbesondere kann die Deckfolie an einer Druckseite mit einem Aufdruck versehen werden, wobei die Deckfolie nachfolgend derart mit der Kunststoffgewebebahn kaschiert, insbesondere extrusionskaschiert wird, dass die Druckseite einer zweiten Seite der Kunststoffgewebebahn zugewandt ist. Der Aufdruck ist dann in dem so gebildeten Kunststoffgewebe-Folien-Verbund innenliegend angeordnet und durch die Deck- und Dekorfolie hindurch sichtbar. Entsprechend ist der Aufdruck in einem Konterdruck aufzubringen.

Die Kunststoffgewebebahn aus dem Folienbändchengewebe weist üblicherweise ein Flächengewicht zwischen 40 g/m² (Gramm pro Quadratmeter) und 80 g/m², insbesondere zwischen 50 g/m² und 70 g/m² auf.

Das Folienbändchengewebe umfasst einander kreuzend verwebte Kunststoffbändchen, die üblicherweise aus orientiertem Polypropylen gebildet sind. Die Breite der einzelnen Bändchen liegt typischerweise zwischen 1 mm und 10 mm, beispielsweise bei etwa 3 mm.

Die Extrusionsfolienbahn weist typischerweise eine Dicke zwischen 25 µm und 90 mm, insbesondere zwischen 30 µm und 80 µm auf. Durch die Blasfolienbahn können weitere Funktionen wie eine gute Barrierewirkung in den Kunststoffgewebe-Folien-Verbund integriert werden, wobei die

Extrusionsfolienbahn auch einen Beitrag zur Stabilität des Verbundes leisten kann.

Bei der Kaschierung zwischen der Kunststoffgewebebahn und der Extrusionsfolienbahn wird eine gegebenenfalls mehrschichtige Kaschierlage erzeugt, deren Dicke üblicherweise zwischen 10 µm und 50 µm, insbesondere zwischen 15 µm und 40 µm liegt.

Wenn gemäß einer Weiterbildung der Erfindung die zuvor beschriebene Deck- und Dekorfolie vorgesehen ist, so kann auch diese mit einer entsprechenden Kaschierlage an der gegenüberliegenden Seite der Kunststoffgewebebahn angeordnet werden. Die Dicke einer solchen Deck- und Dekorfolie kann beispielsweise zwischen 10 und 40 µm, beispielsweise bei etwa 18 µm liegen, wobei als Material biaxial orientiertes Polypropylen (BO-PP) bevorzugt ist. In Betracht kommt unter anderem jedoch auch Polyethylenterephthalat (PET).

Mit dem erfindungsgemäßen Verfahren wird ein Kunststoffgewebe-Folien-Verbundprodukt hergestellt, wobei bereits die nach der Kaschierung der Kunststoffgewebebahn mit der Extrusionsfolienbahn gebildete Verbundbahn ein solches Verbundprodukt darstellt.

Gemäß einer Weiterbildung der Erfindung werden jedoch aus Abschnitten der Verbundbahn Verpackungsbeutel mit der Siegelschicht an einer Beutelinnenseite geformt, wobei durch Falten und/oder Übereinanderlegen der Abschnitte an Überlappungsbereichen Ränder der Abschnitte übereinanderliegen und durch Heißsiegeln miteinander verbunden werden.

Besonders bevorzugt werden in den Überlappungsbereichen Siegelschichten miteinander durch Heißsiegeln verbunden.

Im Rahmen der Erfindung sind grundsätzlich mehrere Varianten denkbar, um aus der Verbundbahn mehrere Verpackungsbeutel zu bilden. Beispielsweise können aus der Verbundbahn zunächst einzelne Abschnitte abgetrennt werden, wobei aus jedem Abschnitt genau ein Verpackungsbeutel gebildet wird. Gemäß einer Variante werden aus der Verbundbahn mehrere Abschnitte abgetrennt, die dann durch ein Verbinden der Abschnitte zu einem Verpackungsbeutel geformt werden.

Gemäß einer besonders bevorzugten Ausgestaltung der Erfindung wird die Verbundbahn zunächst zu einem schlauchförmigen Strang umgeformt, aus dem dann die einzelnen Verpackungsbeutel abgetrennt werden.

Vorzugsweise werden die Verpackungsbeutel mit einander gegenüberliegenden Frontwänden und die Frontwände verbindenden Seitenfalten geformt. Bei einem kontinuierlichen Prozess kann dazu zunächst aus der Verbundbahn ein Seitenfaltenschlauch gebildet werden, von welchem dann die einzelnen noch unbefüllten Verpackungsbeutel abgetrennt werden. Auch die Integration in ein Form-Fill-Seal-Verfahren (FFS-Verfahren) ist möglich.

Gemäß einer bevorzugten Weiterbildung der Erfindung wird der Verpackungsbeutel flüssigkeitsdicht und vorzugsweise auch luftdicht verschlossen, wobei dann die in der Extrusionsfolienbahn optional vorgesehene Barrierefunktion zum Tragen kommt. In bekannter Weise kann trotz einer im Wesentlichen luftdichten und flüssigkeitsdichten Ausgestaltung auch eine Ventilfunktion durch entsprechende Schnitte oder separat angeordnete Ventile vorgesehen sein, um zumindest einen Überdruck in einem geschlossenen Verpackungsbeutel zu vermeiden.

Gegenstand der Erfindung ist auch ein Kunststoffgewebe-Folien-Verbund, der durch das zuvor beschriebene Verfahren erhältlich ist. Der Kunststoffgewebe-Folien-Verbund umfasst eine mehrschichtig coextrudierte Extrusionsfolienbahn und eine Kunststoffgewebebahn aus einem Folienbändchengewebe, wobei die Extrusionsfolienbahn an einer ersten Seite, die eine Außenseite des Verbundes bildet, eine Siegelschicht aufweist und mit einer zweiten Seite über eine zumindest einschichtige Kaschierlage mit einer ersten Seite der Kunststoffgewebebahn verbunden ist. Wie bereits zuvor beschrieben, kann die coextrudierte Blasfolienbahn zumindest dreischichtig mit einer Barriereschicht von EVOH oder PA coextrudiert sein, wobei die Barriereschicht über eine Haftvermittlerschicht an die Siegelschicht anschließt.

Gegenstand der Erfindung ist schließlich auch ein Verpackungsbeutel aus dem zuvor beschriebenen Kunststoffgewebe-Folien-Verbund, wobei die Siegelschicht an einer Beutelinnenseite angeordnet ist und wobei zumindest eine Verbindungsnaht an der Siegelschicht von einer Heißsiegelnaht gebildet ist. Dabei ist vorzugsweise vorgesehen, dass an der Heißsiegelnaht das Folienbändchengewebe in seiner Struktur unverändert ist. Zur Ausbildung der Siegelnaht kann die Siegelschicht von innen z. B. mittels Heißluftdüsen oder auch von außen z. B. mittels Siegelbacken aufgeheizt werden. Darüber hinaus ist es auch möglich eine Versiegelung durch Ultraschall oder auch durch ein Hochfrequenzschweißverfahren herbeizuführen. Bei Verwendung eines Hochfrequenzschweißverfahrens ist es von besonderer Bedeutung, dass die Siegelmaterialien einen ausreichend hohen dielektrischen Verlustfaktor aufweisen. Geeignet ist hierzu z. B. EVA.

Die Erfindung wird im Folgenden anhand einer lediglich ein Ausführungsbeispiel darstellenden Zeichnung erläutert. Es zeigen:
- Fig. 1: eine Anlage zur Herstellung eines Kunststoffgewebe-Folien-Verbundproduktes,
- Fig. 2, 3 und 4: der Schichtaufbau für alternative Ausgestaltungen eines erfindungsgemäßen Kunststoffgewebe-Folien-Verbundes.

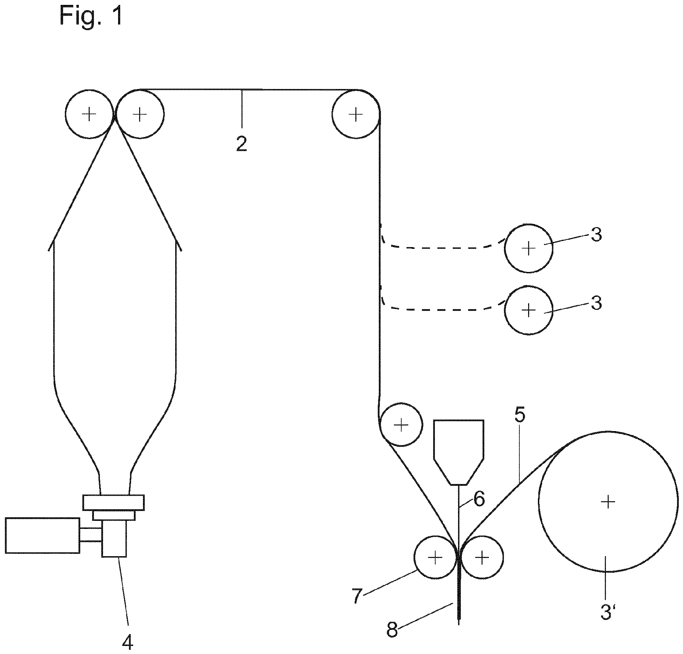

Die Fig. 1 zeigt in einer rein schematischen Darstellung einer Anlage zur Herstellung eines Kunststoffgewebe-Folienverbundproduktes, wobei anhand der Anlage die Schritte des erfindungsgemäßen Verfahrens zu erläutern sind.

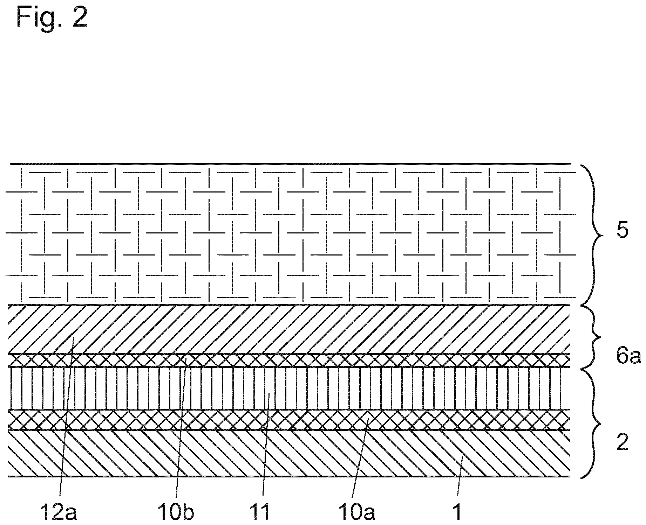

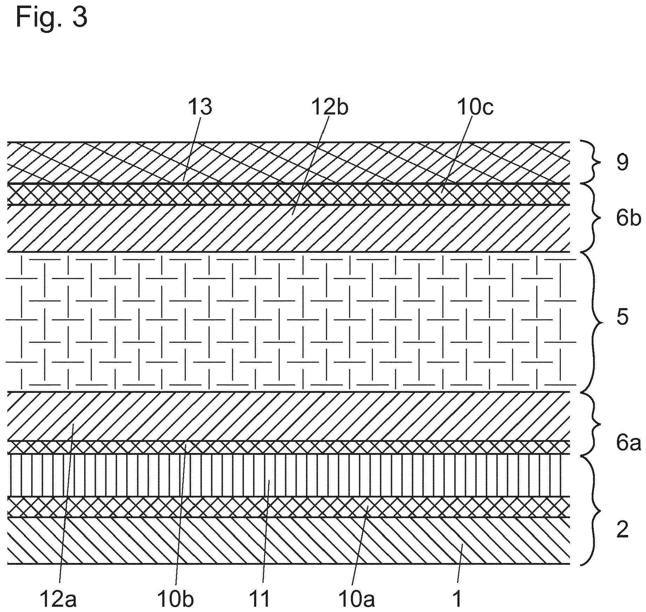

Zu dem konkreten Schichtaufbau des Kunststoffgewebe-Folien-Verbundes wird auf die Fig. 2 und 3 verwiesen.

Zur Herstellung des Kunststoffgewebe-Folien-Verbundproduktes wird durch Blasfolienextrusion eine zumindest eine Siegelschicht 1 aufweisende Extrusionsfolienbahn als Blasfolienbahn 2 derart gebildet, dass sich die Siegelschicht 1 an einer ersten Seite der Blasfolienbahn 2 befindet.

Wie auch unter Berücksichtigung der Fig. 2 und 3 ersichtlich ist, wird die Blasfolienbahn vorzugsweise mehrschichtig coextrudiert.

In üblicher Weise wird die Blasfolienbahn 2 bei ihrer Herstellung unmittelbar nach der Extrusion zunächst expandiert und dann im erkalteten Zustand flachgelegt. Die von der Blasfolienbahn 2 gebildete Blase wird dabei aufgeschnitten. Üblicherweise wird die Blasfolienbahn 2 nach ihrer Herstellung zunächst auf Rollen 3 aufgerollt, die in der Fig. 1 nur schematisch angedeutet sind. Für eine Weiterverarbeitung wird die Blasfolienbahn 2 dann von den Rollen 3 abgezogen.

Zur Vereinfachung der Darstellung zeigt die Fig. 1 jedoch eine Variante, bei der die erkaltete und flachgelegte Blasfolienbahn 2 unmittelbar einer weiteren Verarbeitung zugeführt wird, auch wenn in der Praxis zunächst ein Aufrollen und Abrollen erfolgt.

Hinsichtlich der Blasfolienextrusion ist in der Fig. 1 eine herkömmliche Blasfolienanlage 4 schematisch angedeutet.

Die vorgefertigte Blasfolienbahn 2 wird nach ihrer Herstellung und vorzugsweise nach einer Lagerung auf einer Rolle 3 zusammen mit einer Kunststoffgewebebahn 5 zugeführt, wobei durch eine Extrusionskaschierung die Blasfolienbahn 2 und die Kunststoffgewebebahn 5 durch eine schmelzflüssige Kaschierlage 6a in dem Spalt eines Walzenpaares 7 verbunden werden.

Wie nachfolgend noch weiter beschrieben, werden die Blasfolienbahn 2 und die Kunststoffgewebebahn 5 derart miteinander kaschiert, dass die Siegelschicht 1 an einer ersten Seite der Blasfolienbahn 2 eine Außenschicht der Verbundbahn 8 bildet, während die Blasfolienbahn 2 mit einer zweiten Seite über die Kaschierlage 6a mit der Kunststoffgewebebahn 5 verbunden ist.

Bei dem Ausführungsbeispiel gemäß der Fig. 1 wird die Kunststoffgewebebahn 5 von einer Rolle 3' abgerollt. Dabei kann bereits vorgesehen sein, dass die Kunststoffgewebebahn 5 zuvor mit einer Deckfolie 9 kaschiert wurde, welche an der Verbundbahn 8 gegenüberliegend der Siegelschicht 1 außenseitig angeordnet ist.

Die Fig. 2 zeigt einen bevorzugten Schichtaufbau des in dem Verfahren gemäß der Fig. 1 mit der Verbundbahn 8 gebildeten Kunststoffgewebe-Folien-Verbundes.

Die Kunststoffgewebebahn 5 ist aus einem Folienbändchengewebe gebildet, wobei dieses beispielsweise ein Flächengewicht zwischen 50 und 70 g/m² aufweisen kann. Die einzelnen, in den Figuren nicht weiter dargestellten Folienbändchen sind in der Regel aus gerecktem Polypropylen mit einer Breite von typischerweise etwa 3 mm in einer senkrechten Ausrichtung verwebt.

Erfindungsgemäß umfasst der Kunststoffgewebe-Folien-Verbund eine Blasfolienbahn 2, welche in dem dargestellten Ausführungsbeispiel dreischichtig coextrudiert ist. An die in der Verbundbahn 8 außenliegende Siegelschicht 1 schließt über eine Haftvermittlerschicht 10a eine Funktionsschicht in Form einer Barriereschicht 11 an. Die Gesamtdicke der Blasfolienbahn 2 liegt typischerweise zwischen 30 und 80 µm, wobei als Material für die Barriereschicht 11 insbesondere EVOH und PA sowie für die Siegelschicht 1 Polyolefine, insbesondere Polyethylen, in Betracht kommen.

In dem Ausführungsbeispiel gemäß der Fig. 2 ist die Kaschierlage 6a zweischichtig ausgebildet und grenzt mit einer Haftvermittlerschicht 10b an die Barriereschicht 11 der Blasfolienbahn 2 sowie mit einer Verbindungsschicht 12a aus Polypropylen an die Kunststoffgewebebahn 5 an. Die Dicke der Kaschierlage 6a liegt typischerweise 15 und 40 µm.

Der dargestellte Aufbau der Blasfolienbahn 2 mit der Siegelschicht 1, der Haftvermittlerschicht 10a und der Barriereschicht 11 in der Schichtfolge PE/HV/PA oder EVOH ist rein exemplarisch. Insbesondere können im Rahmen der Erfindung auch leicht Blasfolienbahnen 2 mit mehr als drei Schichten gebildet werden. Geeignet sind beispielsweise auch Schichtaufbauten PE/HV/EVOH/HV/PE, PE/HV/PA/HV/PE, PE/HV/PA/EVOH/PA/HV/PE.

Die Fig. 3 zeigt, dass auch die in den Figuren obenliegende zweite Seite der Kunststoffgewebebahn 5 mit einer Folie kaschiert werden kann, welche dann jedoch eine außenliegende Deckfolie 9 bildet.

Als Material für die Deckfolie 9 kommen insbesondere biaxial orientiertes Polypropylen (BO-PP) und Polyethylenterephthalat (PET) in Betracht. Die Dicke der Deckfolie 9 liegt typischerweise zwischen 10 und 40 µm. Insbesondere kann die Deckfolie 9 in Richtung der Kunststoffgewebebahn 5 mit einem Aufdruck 13 versehen sein, der an der gebildeten Verbundbahn 8 innenliegend geschützt angeordnet ist.

Die Deckfolie 9 und die Kunststoffgewebebahn 5 werden vorzugsweise durch eine Extrusionskaschierung miteinander verbunden, wozu eine weitere Kaschierlage 6b vorgesehen sein kann. Ähnlich wie die zuvor beschriebene Kaschierlage 6a kann diese zweischichtig mit einer Haftvermittlerschicht 10c und einer Verbindungsschicht 12b ausgeführt sein.

Aus dem Kunststoffgewebe-Folien-Verbund können Verpackungsbeutel gebildet werden, bei denen sich die Siegelschicht 1 an einer Beutelinnenseite befindet. Es ist dann auch möglich, einen solchen Beutel heißzusiegeln, wobei zumindest eine Verbindungsnaht an der Siegelschicht 1 von einer Heißsiegelnaht gebildet ist, ohne dass dort das Folienbändchengewebe in seiner Struktur beeinträchtigt ist.

Beispielsweise kann bei einem Seitenfaltenbeutel eine über die Beutellänge verlaufende Rückennaht durch Heißluft gebildet werden. Ein Kopf und ein Boden des Folienbeutels können wahlweise durch Heißsiegelungen gebildet werden, wobei optional auch ein stufenförmiger Beschnitt der Frontwände sowie der Seitenfalten für einen verbesserten Verschluss in Betracht kommen.

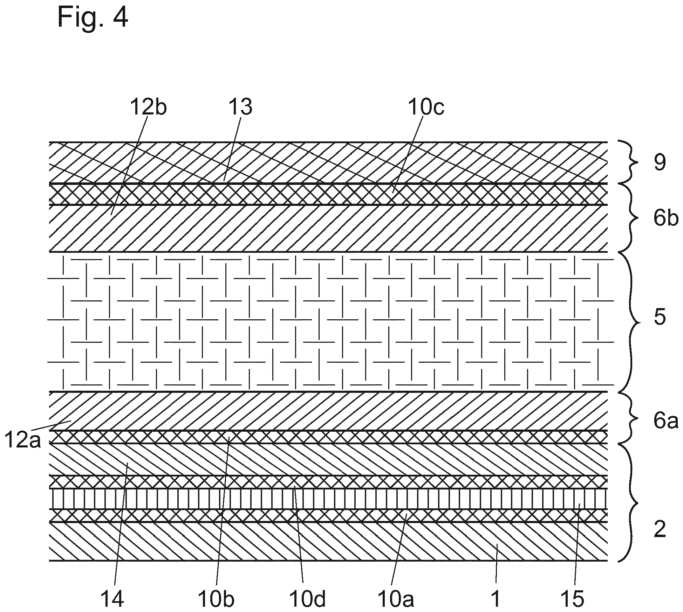

Die Fig. 4 zeigt ausgehend von der Kunststoffgewebebahn gemäß der Fig. 3 einen fünfschichtigen Aufbau der Blasfolienbahn 2. Die in der Verbundbahn 8 außenliegende Siegelschicht 1 ist aus Polyethylen hergestellt und weist eine Schichtdicke von 22 µm auf. Über eine Haftvermittlerschicht 10a mit einer Schichtdicke von 5 µm schließt an der Siegelschicht 1 eine 6 µm dicke Schicht aus EVOH an. Über eine weitere 5 µm dicke Haftvermittlerschicht 10d schließt sich eine weitere Polyethylenschicht in einer Stärke von 22 µm an. Die gesamte Blasfolienbahn 2 weist somit eine Schichtdicke von 60 µm auf.

Die Blasfolienbahn 2 ist über eine Kaschierlage 6a mit der Kunststoffgewebebahn 5 verbunden. Die Kaschierlage 6a besteht aus einer Verbindungsschicht 12a, die vorzugsweise aus Polyethylen oder einem Blend aus Polypropylen und Polyethylen besteht, und einer Haftvermittlerschicht 10b aus Lotader - einem Terpolymer. Die Verbindungsschicht 12a weist vorzugsweise eine Stärke von 28 µm auf und die Haftvermittlerschicht 10b eine Stärke von 7 µm. Die Kaschierlage 6a grenzt darüber hinaus mit der Haftvermittlerschicht 10b an die Polyethylenschicht 14 der Blasfolienbahn 2 sowie mit der Verbindungsschicht 12a an die Kunststoffgewebebahn 5.

Die Deckfolie 9 ist in dem gezeigten Beispiel vorzugsweise aus Polyethylen oder orientierten Polypropylen (OPP) gefertigt und weist typischerweise eine Dicke zwischen 18 und 20 µm auf.

Die Deckfolie 9 ist darüber hinaus über die Kaschierlage 6b mit der Kunststoffgewebebahn 5 verbunden, wobei die Kaschierlage 6b entweder gleichermaßen wie die Kaschierlage 6a ausgebildet ist oder einen Schichtaufbau entsprechend einer der vorangegangenen Beispiele aufweist.

## Patentansprüche

1. Verfahren zur Herstellung eines Kunststoffgewebe-Folien-Verbundproduktes,
wobei durch Folienextrusion eine zumindest eine Siegelschicht (1) aufweisende Extrusionsfolienbahn (2) derart gebildet wird, dass sich die Siegelschicht (1) an einer ersten Seite der Extrusionsfolienbahn (2) befindet und
wobei eine Kunststoffgewebebahn (5) aus einem Folienbändchengewebe und die vorgefertigte Extrusionsfolienbahn (2) zugeführt und miteinander zu einer Verbundbahn (8) derart kaschiert werden, dass eine zweite Seite der Extrusionsfolienbahn (2), einer ersten Seite der Kunststoffgewebebahn (5) zugewandt ist.

2. Verfahren nach Anspruch 1, wobei die Extrusionsfolienbahn (2) mittels Blasfolienextrusion extrudiert wird.

3. Verfahren nach Anspruch 1 oder 2, wobei die Extrusionsfolienbahn (2) mehrschichtig coextrudiert wird.

4. Verfahren nach Anspruch 3, wobei die Extrusionsfolienbahn (2) zusätzlich zu der Siegelschicht (1) zumindest eine Barriereschicht (11) aufweist.

5. Verfahren nach einem der Ansprüche 1 bis 4, wobei die vorgefertige Extrusionsfolienbahn (2) und die Kunststoffgewebebahn (5) durch eine Extrusionskaschierung miteinander verbunden werden.

6. Verfahren nach einem der Ansprüche 1 bis 5, wobei eine Deckfolie (9) an einer Druckseite mit einem Aufdruck versehen und nachfolgend derart mit der Kunststoffgewebebahn (5) kaschiert wird, dass die Druckseite einer zweiten Seite der Kunststoffgewebebahn (5) zugewandt ist.

7. Verfahren nach einem der Ansprüche 1 bis 6, wobei die Kunststoffgewebebahn (5) mit einem Flächengewicht zwischen 40 g/m² und 80 g/m² und die Extrusionsfolienbahn (2) mit einer Dicke zwischen 25 µm und 90 µm zugeführt werden und wobei eine bei der Kaschierung gebildete Kaschierlage eine Dicke zwischen 10 µm und 50 µm aufweist.

8. Verfahren nach einem der Ansprüche 1 bis 7, wobei aus Abschnitten der Verbundbahn (8) Verpackungsbeutel mit der Siegelschicht (1) an einer Beutelinnenseite geformt werden, wobei an durch Falten und/oder Übereinanderlegen der Abschnitte gebildeten Überlappungsbereichen Ränder der Abschnitte durch Heißsiegeln miteinander verbunden werden.

9. Verfahren nach Anspruch 8, wobei der Verpackungsbeutel flüssigkeitsdicht verschlossen wird.

10. Verfahren nach Anspruch 8 oder 9, wobei der Verpackungsbeutel mit einander gegenüberliegenden Frontwänden und die Frontwände verbindenden Seitenfalten geformt wird.

11. Verfahren nach Anspruch 10, wobei aus der Verbundbahn (8) zunächst ein Seitenfaltenschlauch gebildet wird, von welchem dann die einzelnen Verpackungsbeutel abgetrennt werden.

12. Kunststoffgewebe-Folien-Verbund, erhältlich nach einem Verfahren gemäß einem der Ansprüche 1 bis 6, umfassend eine mehrschichtig coextrudierte Extrusionsfolienbahn (2) und eine Kunststoffgewebebahn (5) aus einem Folienbändchengewebe, wobei die Extrusionsfolienbahn (2) an einer ersten Seite, die eine Außenseite des Verbundes bildet, eine Siegelschicht (1) aufweist und mit einer zweiten Seite über eine zumindest einschichtige Kaschierlage (6a) mit einer ersten Seite der Kunststoffgewebebahn (5) verbunden ist.

13. Kunststoffgewebe-Folien-Verbund nach Anspruch 12, wobei die coextrudierte Extrusionsfolienbahn (2) zumindest dreischichtig ist und eine Barriereschicht (11) auf der Basis von Ethylen-Vinylalkohol-Copolymer (EVOH) oder Polyamid (PA) aufweist, welche über eine Haftvermittlerschicht (10a) an die Siegelschicht (1) anschließt.

14. Verpackungsbeutel aus einem Kunststoffgewebe-Folien-Verbund nach Anspruch 12 oder 13, wobei die Siegelschicht (1) an einer Beutelinnenseite angeordnet ist und wobei zumindest eine Verbindungsnaht an der Siegelschicht (1) von einer Heißsiegelnaht gebildet ist, ohne dass entlang der Heißsiegelnaht das Folienbändchengewebe in seiner Struktur verändert ist.

## Claims

1. A method for producing a plastic fabric-film composite product,
wherein an extruded film web (2) comprising at least one sealing layer (1) is formed by film extrusion in such a manner that the sealing layer (1) is located on the first side of the extruded film web (2),
wherein a plastic fabric web (5) comprising a film-strip fabric and the pre-fabricated extruded film web (2) is suppled and laminated together to form a composite web (8) in such a manner that a second side of the extruded film web (2) is facing a first side of the plastic fabric web (5).

2. The method according to Claim 1, wherein the extruded film web (2) is extruded by means of blown film extrusion.

3. The method according to Claim 1 or 2, wherein the extruded film web (2) is co-extruded in multiple layers.

4. The method according to Claim 3, wherein the extruded film web (2) has at least one barrier layer (11) in addition to the sealing layer (1).

5. The method according to one of Claims 1 to 4, wherein the pre-fabricated extruded film web (2) and the plastic fabric web (5) are joined to one another by an extrusion lamination.

6. The method according to one of Claims 1 to 5, wherein a cover film (9) is provided with an imprint on a print side and subsequently laminated with the plastic fabric web (5) in such a manner that the print side is facing a second side of the plastic fabric web (5).

7. The method according to one of Claims 1 to 6, wherein the plastic fabric web (5) having a weight per unit area between 40 g/m² and 80 g/m² and the extruded film web (2) having a thickness between 25 µm and 90 µm are supplied and wherein a lamination layer formed by the laminating has a thickness between 10 µm and 50 µm.

8. The method according to one of Claims 1 to 7, wherein packaging bags are formed from sections of the composite web (8) with the sealing layer (1) on a bag inner side, wherein edges of the sections are joined together by heat sealing at overlap regions formed by folding and/or placing the sections one above the other.

9. The method according to Claim 8, wherein the packaging bag is closed in a liquid-tight manner.

10. The method according to Claim 8 or 9, wherein the packaging bag is formed with front walls opposite one another and side gussets connecting the front walls.

11. The method according to Claim 10, wherein initially one side-gusseted tube is formed from the composite web (8), from which the individual packaging bags are then separated.

12. A plastic fabric-film composite which can be obtained by a method according to one of Claims 1 to 6, comprising a multi-layer co-extruded extruded film web (2) and a plastic fabric web (5) comprising a film-strip web, wherein the extruded film web (2) has a sealing layer (1) on a first side forming an outer side of the composite and is joined with a second side to a first side of the plastic fabric web (5) by means of an at least single-layer lamination layer (6a).

13. The plastic fabric-film composite according to Claim 12, wherein the co-extruded extruded film web (2) is at least three-layer and comprises a barrier layer (11) based on ethylene-vinyl alcohol copolymer (EVOH) or polyamide (PA), which adjoins the sealing layer (1) via an adhesion promoter layer (10a).

14. A packaging bag comprising a plastic fabric-film composite according to Claim 12 or 13, wherein the sealing layer (1) is arranged on a bag inner side and wherein at least one connecting seam is formed by a heat sealing seam at the sealing layer (1), without the film-strip fabric being changed in its structure along the heat sealing seam.

## Revendications

1. Procédé de fabrication d'un produit composite de tissé de plastique-film,
dans lequel au moins un lé de film extrudé (2) présentant une couche de scellement (1) est formé par extrusion de film de telle sorte que la couche de scellement (1) se trouve sur une première face du lé de film extrudé (2) et
dans lequel un lé de tissé de plastique (5) d'un tissé de bandes de film et un lé de film extrudé (2) pré-fabriqué sont dirigés et pelliculés ensemble en un lé composite (8) de telle façon qu'une seconde face du lé de film extrudé (2) est tournée vers une première face du lé de tissé de plastique (5).

2. Procédé selon la revendication 1, dans lequel le lé de film extrudé (2) est extrudé par extrusion de film soufflé.

3. Procédé selon la revendication 1 ou 2, dans lequel le lé de film extrudé (2) est co-extrudé multi-couches.

4. Procédé selon la revendication 3, dans lequel le lé de film extrudé (2) présente au moins une couche barrière (11) en plus de la couche de scellement (1).

5. Procédé selon l'une des revendications 1 à 4, dans lequel le lé de film extrudé (2) pré-fabriqué et le lé de tissé de plastique (5) sont reliés entre eux par un pelliculage par extrusion.

6. Procédé selon l'une des revendications 1 à 5, dans lequel une couche de couverture (9) est dotée d'une impression sur une face imprimée et est ensuite pelliculée de telle sorte avec le lé de tissé de plastique (5) que la face imprimée est tournée vers une seconde face du lé de tissé de plastique (5).

7. Procédé selon l'une des revendications 1 à 6, dans lequel le lé de tissé de plastique (5) avec un poids surfacique entre 40 g/m² et 80 g/m² et le lé de film extrudé (2) avec une épaisseur entre 25 µm et 90 µm sont dirigés et dans lequel une couche de pelliculage formée lors du pelliculage présente une épaisseur entre 10 µm et 50 µm.

8. Procédé selon l'une des revendications 1 à 7, dans lequel des sachets d'emballage sont formés à partir de tronçons du lé composite (8), avec la couche de scellement (1) sur une face intérieure du sachet, dans lequel sur des zones qui se chevauchent formées par pliage et/ou pose l'un sur l'autre des tronçons, des bords des tronçons sont reliés entre eux par thermoscellage.

9. Procédé selon la revendication 8, dans lequel le sachet d'emballage est fermé en étanchéité aux liquides.

10. Procédé selon la revendication 8 ou 9, dans lequel le sachet d'emballage est formé avec des parois avant opposées entre elles et des plis latéraux reliant les parois avant.

11. Procédé selon la revendication 10, dans lequel un tube de plis latéraux est d'abord formé à partir du lé composite (8), duquel les différents sachets d'emballage sont ensuite séparés.

12. Composite de tissé de plastique-film, obtenu selon un procédé selon l'une des revendications 1 à 6, comprenant un lé de film extrudé (2) coextrudé multi-couches et un lé de tissé de plastique (5) dans un tissé de bandes de film, dans lequel le lé de film extrudé (2) présente une couche de scellement (1) sur une première face qui forme une face extérieure du composite, et est relié par une seconde face à une première face du lé de tissé de plastique (5) par le biais d'une couche pelliculée au moins mono-couche (6a) .

13. Procédé selon la revendication 12, dans lequel le lé de film extrudé (2) coextrudé a au moins trois couches et présente une couche barrière (11) à base de copolymère éthylène-alcool vinylique (EVOH) ou de polyamide (PA) qui se raccorde à la couche de scellement (1) par une couche d'agent d'accrochage (10a) .

14. Sachet d'emballage à partir d'un composite de tissé de plastique-film, selon la revendication 12 ou 13, dans lequel la couche de scellement (1) est disposée sur une face intérieure de sachet et dans lequel au moins un cordon de soudure est formé sur la couche de scellement (1) par un cordon de thermosoudage, sans que le tissé de bandes de film ne soit modifié dans sa structure le long du cordon de soudage à chaud.
